# EUROPÄISCHE PATENTANMELDUNG

(11) **EP 1 544 755 A1**
(43) Veröffentlichungstag der Anmeldung: **22.06.2005**
(21) Anmeldenummer: 04028499.4
(22) Anmeldetag: 02.12.2004
(51) Int. Cl.: G06F 17/30

(54) **Verfahren zum Übertragen von Informationen**

(30) Priorität: 16.12.2003 EP 03028878
(71) Anmelder: Quelle Aktiengesellschaft, 90762 Fürth (DE)
(72) Erfinder: Schwarm, Christian, 70599 Stuttgart (DE)
(74) Vertreter: Blaumeier, Jörg

(57) **Zusammenfassung**

Verfahren zum Übertragen von Informationen von einem Serverrechner über ein Netzwerk an einen Computer eines Benutzers, bei welchem Verfahren nach der Eingabe einer Netzwerkadresse eines Anbieters Informationen des Anbieters an den Computer des Benutzers übertragen und in einem Fenster eines Browserprogramms als Informationsseite dargestellt werden, wobei beim Drücken einer Taste durch den Benutzer der dieser Taste zugeordnete Tastaturcode mit einem festgelegten Tastaturcode verglichen und bei Übereinstimmung ein weiteres Fenster des Browserprogramms geöffnet wird, in dem Informationen des Anbieters dargestellt werden, wobei die Überprüfung der gedrückten Taste und das Öffnen des weiteren Fensters von einem auf der Informationsseite des Anbieters implementierten und vom Server zum Computer übertragenen Programm gesteuert wird.

## Beschreibung

Die Erfindung betrifft ein Verfahren zum Übertragen von Informationen von einem Serverrechner über ein Netzwerk an einen Computer eines Benutzers, bei welchem Verfahren nach der Eingabe einer Netzwerkadresse eines Anbieters Informationen des Anbieters an den Computer des Benutzers übertragen und in einem Fenster eines Browserprogramms als Informationsseite dargestellt werden.

Derartige Verfahren werden beispielsweise von Händlern benutzt, um Waren über ein Netzwerk wie das Internet anzubieten. Der Benutzer oder Kunde benötigt dafür ein Endgerät wie einen PC, auf dem ein Browserprogramm installiert ist sowie eine Kommunikationsverbindung mit dem Internet.

In dem Browserprogramm gibt der Benutzer die gewünschte Netzwerk- oder Internetadresse des Anbieters ein, anschließend werden Informationen von dem Serverrechner über das Netzwerk bzw. die Internetverbindung an den Computer des Benutzers geschickt. Das Browserprogramm stellt diese empfangenen Informationen als Informationsseite dar.

Informationsseiten weisen zumeist mehrere Schaltflächen auf, die vom Benutzer ausgewählt werden können, indem er den Cursor mit einem Eingabegerät wie eine Maus auf die entsprechende Fläche bewegt und die Fläche anklickt. Auf der Informationsseite kann eine Suchfunktion vorhanden sein, die das Auffinden bestimmter Produkte erleichtert. Es ist auch üblich, dass dem Benutzer ein virtueller Warenkorb zur Verfügung gestellt wird, in dem die von dem Benutzer ausgewählten Waren gespeichert werden, bevor der Kauf- oder Bestellvorgang abgeschlossen ist. Ferner hat der Benutzer die Möglichkeit, sein Kundenkonto einzusehen, auf dem seine bisherigen Bestellungen einsehbar sind. Neben weiteren Hilfe-, Service- und Informationsangeboten kann die Internetseite Informationen über das Unternehmen oder über aktuelle Angebote umfassen.

Es ist auch bereits bekannt, sogenannte Pop-up-Fenster zu verwenden, die sich über dem Fenster des Browserprogramms selbsttätig öffnen. In dem Pop-up-Fenster kann auf spezielle Angebote hingewiesen werden. Von vielen Benutzern werden Pop-up-Fenster jedoch als lästig empfunden, da sie häufig den Text der Informationsseite verdecken. Es ist auch bereits spezielle Software entwickelt worden, um Pop-up-Fenster zu unterdrücken.

Der Erfindung liegt daher das Problem zugrunde, ein Verfahren zu schaffen, das es ermöglicht, Informationen zu einem Benutzer zu übertragen und mit einem Browserprogramm anzuzeigen, ohne dass diese Informationen als störend empfunden werden.

Zur Lösung dieses Problems ist bei einem Verfahren der eingangs genannten Art erfindungsgemäß vorgesehen, dass beim Drücken einer Taste durch den Benutzer der dieser Taste zugeordnete Tastaturcode mit einem festgelegten Tastaturcode verglichen und bei Übereinstimmung ein weiteres Fenster des Browserprogramms geöffnet wird, in dem Informationen des Anbieters dargestellt werden, wobei die Überprüfung der gedrückten Taste und das Öffnen des weiteren Fensters von einem auf der Informationsseite des Anbieters implementierten und vom Server zum Computer übertragenen Programm gesteuert wird.

Anders als bei bekannten Verfahren, bei denen Pop-up-Fenster geöffnet werden, ohne dass der Benutzer darauf Einfluss hat, ist erfindungsgemäß vorgesehen, dass das weitere Fenster nur aufgrund einer Aktion des Benutzers geöffnet wird. Der Anbieter kann daher sicher sein, dass der Benutzer an den in dem weiteren Fenster des Browserprogramms dargestellten Informationen interessiert ist, da er das Öffnen des weiteren Fensters selbst veranlasst hat. Das erfindungsgemäße Verfahren eignet sich daher insbesondere dazu, dem Kunden ein außerordentliches Angebot zu offerieren oder um eine neue interessante Aktion bekannt zu machen.

Bei dem erfindungsgemäßen Verfahren ist es vorgesehen, dass die Überprüfung der von dem Benutzer gedrückten Taste und das Öffnen des weiteren Fensters von einem auf der Informationsseite des Anbieters implementierten Programm gesteuert wird. Der Ablauf des erfindungsgemäßen Verfahrens ist unabhängig von dem verwendeten Browserprogramm oder Software- oder Hardwareeinstellungen am Computer des Benutzers, da das Programm, das erfindungsgemäß das weitere Fenster öffnet, in die Informationsseite oder Homepage des Anbieters integriert ist und beim Aufrufen dieser Informationsseite an den Benutzer übertragen wird.

Daneben betrifft die Erfindung alternativ oder zusätzlich ein Verfahren zum Übertragen von Informationen von einem Serverrechner über ein Netzwerk an einen Computer eines Benutzers, bei welchem Verfahren benutzerseitig ein über eine Informationsseite eines Anbieters und/oder einen Datenträger zugängliches Programm des Anbieters auf dem Benutzercomputer installiert wird, welches die Darstellung einer anbieterspezifischen Symbolleiste in wenigstens einem Fenster eines Browserprogramms bewirkt, welches Verfahren dadurch gekennzeichnet ist, dass bei Ausführung des Browserprogramms beim Drücken einer Taste durch den Benutzer der dieser Taste zugeordnete Tastaturcode mit einem festgelegten Tastaturcode verglichen und bei Übereinstimmung ein weiteres Fenster des Browserprogramms geöffnet wird, in dem Informationen des Anbieters dargestellt werden, wobei die Überprüfung der gedrückten Taste und das Öffnen des weiteren Fensters von dem installierten Programm gesteuert wird.

Hierbei stellt der Anbieter dem Benutzer ein Programm zur Verfügung, das dieser auf seinem Rechner installiert, um so primär die Darstellung einer Symbolleiste in seinem Browser zu erreichen. Eine solche Symbolleiste kann z. B. als "Toolbar" unterhalb des Eingabefeldes für die Netzadresse im Browser vorgesehen sein. Dieses Programm besitzt erfindungsgemäß zusätzlich die Funktionalität, dass bei Ausführung des Browserprogramms, wenn der Browser gestartet wurde und aktiv ist, der Tastaturcode einer gedrückten Taste mit einem festgelegten Code verglichen wird und bei Übereinstimmung wiederum ein Pop-up-Fenster geöffnet wird.

Es ist besonders zweckmäßig, dass der festgelegte Tastaturcode einer Buchstabentaste oder einer Zahlentaste oder einer Sonderzeichentaste zugeordnet ist. Buchstaben oder Zahlen lassen sich besonders leicht merken, es kann daher auch vorgesehen sein, dass der Anbieter lediglich einen einzigen Buchstaben festlegt, so dass beim Drücken der entsprechenden Taste das weitere Browserfenster geöffnet wird. Gemäß einer Weiterbildung des erfindungsgemäßen Verfahrens kann es vorgesehen sein, dass das Programm überprüft, ob die festgelegte Buchstaben- oder Zahlentaste zusammen mit einer anderen Taste wie der Shift-Taste oder der Alt-Gr-Taste gedrückt ist.

Eine besonders hohe Akzeptanz des erfindungsgemäßen Verfahrens lässt sich erzielen, wenn der festgelegte Tastaturcode dem Benutzer über ein anderes Medium wie einen Katalog, eine Werbeanzeige, einen Werbebrief, eine E-Mail oder eine SMS mitgeteilt wird. Über das andere Medium erfährt der Benutzer, dass er nach dem Aufrufen der Informationsseite des Anbieters über die Netzwerk- oder Internetverbindung eine bestimmte Taste drücken muss, um spezielle Informationen oder Angebote zu erhalten. Dadurch wird die Neugier des Benutzers geweckt, der erfahren möchte, um welche Angebote es sich dabei handelt. Alternativ oder zusätzlich kann es bei dem erfindungsgemäßen Verfahren jedoch auch vorgesehen sein, dass auf der oder einer Informationsseite des Anbieters auf den festgelegten Tastaturcode hingewiesen wird. Eine noch höhere Attraktivität für Benutzer lässt sich erzielen, wenn in dem weiteren Fenster des Browserprogramms jeweils wechselnde Informationen oder Angebote dargestellt werden, die beispielsweise täglich oder wöchentlich geändert werden. Dadurch wird der Benutzer veranlasst, bei jedem Besuch der Informationsseite des Anbieters die Taste mit dem festgelegten Tastaturcode zu drücken.

Gemäß einer Weiterbildung des erfindungsgemäßen Verfahrens kann es vorgesehen sein, dass verschiedene Tastaturcodes festgelegt werden, bei deren Eingabe ein dem jeweiligen Tastaturcode zugeordnetes weiteres Fenster geöffnet wird. Durch die Verwendung mehrerer Tastaturcodes kann eine noch bessere Anpassung an Vorlieben und Bedürfnisse von Benutzern erfolgen. Es ist beispielsweise möglich, einer bestimmten Warengruppe einen eigenen Tastaturcode zuzuordnen. Beim Drücken der jeweiligen Taste werden in dem weiteren Browserfenster Angebote dieser Warengruppe dargestellt. Es ist auch möglich, verschiedenen Zielgruppen jeweils einen Tastaturcode zuzuordnen, so dass beim Drücken der entsprechenden Taste zielgruppenspezifische Angebote gemacht werden. Der Benutzer kann auch nacheinander verschiedene Tastaturcodes eingeben, damit jeweils ein weiteres Fenster mit einem spezifischen Inhalt geöffnet wird.

Um das erfindungsgemäße Verfahren zu implementieren, wird als gegebenenfalls auf der Informationsseite des Anbieters implementiertes Programm vorzugsweise ein Programm verwendet, das in einer Scriptsprache wie ECMA-Script oder Java oder JavaScript oder Jscript oder VB-Script geschrieben ist. Von diesen Programmiersprachen wird diejenige bevorzugt, die von den gängigen Browserprogrammen verstanden wird. Es kann auch vorgesehen sein, dass zunächst geprüft wird, welche Scriptsprache auf dem Computer des Benutzers ausgeführt werden kann, um anschließend das passende Scriptprogramm zu übertragen.

Bei dem erfindungsgemäßen Verfahren kann es vorgesehen sein, dass das weitere geöffnete Fenster kleiner als das erste Fenster des Browserprogramms ist. In diesem Fall kann der Benutzer trotz des weiteren geöffneten Browserfensters das ursprüngliche Browserfenster mit der Informationsseite des Anbieters überblicken und entscheiden, ob er die Informationen des ersten oder des weiteren Browserfensters lesen möchte. Dabei ist es besonders vorteilhaft, dass das ursprünglich geöffnete Browserfenster nicht vollständig verdeckt wird.

In dem weiteren Fenster können Angebote des Anbieters dargestellt werden, insbesondere Gewinnspiele, Preisausschreiben, Auktionen oder Rabattaktionen.

Ein besonders hoher Wiedererkennungseffekt lässt sich bei dem erfindungsgemäßen Verfahren erzielen, wenn der festgelegte Tastaturcode mit dem Anfangsbuchstaben des Namens des Anbieters übereinstimmt. Diesen Tastaturcode bzw. die zugeordnete Buchstabentaste kann sich der Benutzer besonders leicht merken, so dass er die entsprechende Taste auch dann drückt, wenn darauf nicht besonders hingewiesen wird, um sich über aktuelle Aktionen oder Angebote zu informieren.

Es hat sich als besonders günstig herausgestellt, wenn gegebenenfalls die Homepage des Anbieters als Informationsseite verwendet wird. Die Homepage hat dabei die Funktion eines zentralen Internetportals, von dem aus sämtliche damit verknüpften Seiten aufrufbar sind.

Es ist vorteilhaft, wenn die gegebenenfalls vorgesehene anbieterspezifische Symbolleiste ständig, insbesondere unabhängig von einer gegebenenfalls aufgerufenen Netzseite, angezeigt wird. So verweist diese Symbolleiste, sobald der Browser gestartet wird, auf den Anbieter bzw. die Funktionalitäten, die dieser dem Benutzer zur Verfügung stellt. Zudem wird so das Erscheinen der Symbolleiste für den Benutzer deutlich sichtbar mit der Möglichkeit zum Erhalt des weiteren Fensters des Anbieters verknüpft, nicht nur in der Implementierung über das auf dem Rechner des Benutzers installierte Programm. Die Symbolleiste kann beispielsweise eine Suche im Netzwerk, insbesondere auf den Seiten des Anbieters, ermöglichen. Hierzu umfasst die Symbolleiste ein Eingabefeld, in das der Benutzer den gewünschten Suchbegriff eingeben kann. Weitere Funktionen der Symbolleiste können beispielsweise dazu dienen, die Suche auf bestimmte Seiten oder Waren zu beschränken.

Weitere Vorteile und Einzelheiten der Erfindung werden anhand zweier Ausführungsbeispiele unter Bezugnahme auf die Figuren erläutert. Die Figuren sind schematische Darstellungen und zeigen:
- Fig. 1: den Computer eines Benutzers mit einer dargestellten Informationsseite eines Anbieters gemäß einem ersten Ausführungsbeispiel;
- Fig. 2: ein Flussdiagramm eines erfindungsgemäßen Verfahrens, und
- Fig. 3: den Computer eines Benutzers mit einer Symbolleiste in einem Browserfenster gemäß einem zweiten Ausführungsbeispiel.

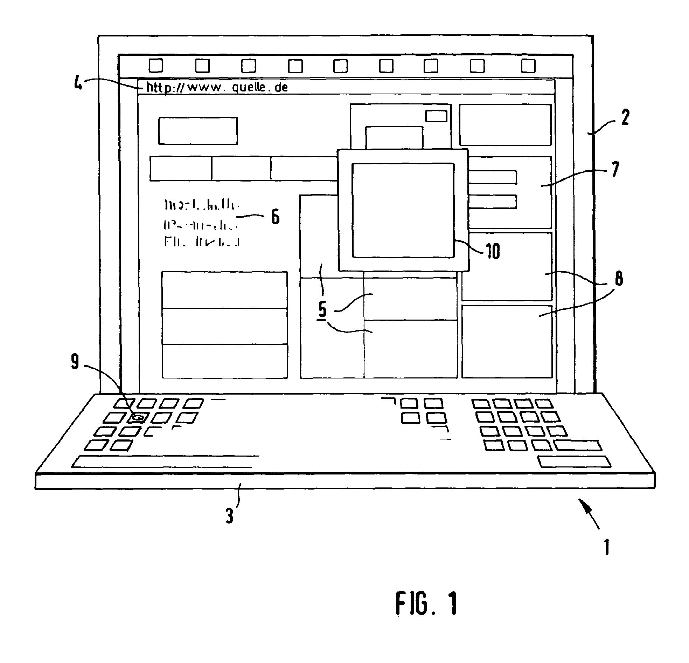

Fig. 1 zeigt den Computer eines Benutzers mit einer dargestellten Informationsseite eines Anbieters gemäß einem ersten Ausführungsbeispiel.

Der Computer 1 besteht im Wesentlichen aus dem Bildschirm 2 und der Tastatur 3. Nicht dargestellt ist das zugehörige Computergehäuse, das die Hardware wie Mainboard, Festplatten und weitere Geräte und Schnittstellen enthält.

Auf dem Computer 1 ist ein Browserprogramm installiert, das das Abrufen und Betrachten von Informationsseiten über das Internet ermöglicht. Zu diesem Zweck ist der Computer über eine in Fig. 1 nicht dargestellte Kommunikationsverbindung mit dem Internet verbunden. Der Benutzer gibt in einem Eingabefeld 4 die Netzwerk- oder Internetadresse des gewünschten Anbieters ein, anschießend werden über die Kommunikationsverbindung Daten von einem Serverrechner an den Computer 1 übertragen, die durch das Browserprogramm auf dem Bildschirm 2 grafisch dargestellt werden. Nach dem Aufrufen der Informationsseite bzw. der Homepage des Anbieters erscheint die grafische Oberfläche auf dem Bildschirm 2, die aus einer Reihe von Schaltflächen 5, 6, 7, 8 besteht. Der Benutzer kann mit einer Maus den Cursor auf eine bestimmte Schaltfläche bewegen und dieses Feld anklicken. Dadurch wird zu weiteren Internetseiten verzweigt, auf denen bestimmte Angebote dargestellt werden.

Der Benutzer weiß, dass er durch das Drücken einer bestimmten Buchstabentaste spezielle Informationen oder Angebote aufrufen kann. In dem dargestellten Ausführungsbeispiel muss er die mit dem Buchstaben "Q" versehene Taste 9 drücken. Anschließend öffnet sich ein weiteres Browserfenster 10, das oberhalb des ersten Browserfensters angezeigt wird. In diesem Browserfenster wird der Benutzer auf ein spezielles Angebot oder eine Aktion des Anbieters aufmerksam gemacht.

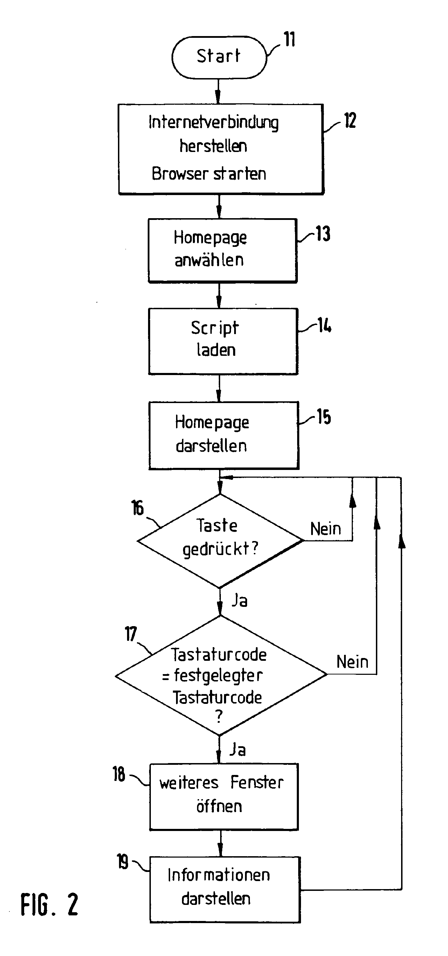

Fig. 2 zeigt ein Flussdiagramm des Verfahrens gemäß dem ersten Ausführungsbeispiel. Nach dem Start im Schritt 11 wird im Schritt 12 die Internetverbindung zwischen dem Computer und dem Serverrechner hergestellt sowie der Browser gestartet.

Nach der Eingabe der Internetadresse der Homepage im Schritt 13 werden die zugehörigen Daten vom Serverrechner geladen, ebenso das Script im Schritt 14. Im Schritt 15 wird die Homepage des Anbieters auf dem Bildschirm dargestellt.

Anschließend wird in einer Programmschleife im Schritt 16 geprüft, ob der Benutzer eine Taste gedrückt hat. Wenn keine Taste gedrückt ist, wird wieder zurückverzweigt, die Schleife wird dann unendlich oft durchlaufen. Die Schleife wird verlassen, wenn der Benutzer ein Eingabefeld des Browsers anklickt. Wenn eine Taste gedrückt worden ist, wird im Schritt 17 geprüft, ob der Tastaturcode, der der gedrückten Taste zugeordnet ist, mit dem festgelegten Tastaturcode übereinstimmt. Wenn keine Übereinstimmung vorliegt, wird wieder zum vorhergehenden Schritt zurückverzweigt, so dass die Tastaturüberprüfung erneut durchgeführt wird. Wenn Übereinstimmung festgestellt wird, wird im Schritt 18 das weitere Fenster, das sogenannte Pop-up-Fenster, im Browser geöffnet. In diesem Fenster werden im Schritt 19 die speziellen Informationen oder Angebote dargestellt. Anschließend wird wieder zum Schritt 16 zurückverzweigt, in dem geprüft wird, ob eine Taste gedrückt worden ist.

Das Verfahren kann auch in einer modifizierten Variante ablaufen, bei der die Tastaturabfrage anders als in dem zuvor beschriebenen Schritt 16 nicht in einer Endlosschleife durchgeführt wird. Bei dem modifizierten Verfahren wird das Script automatisch gestartet, nachdem eine Taste gedrückt worden ist. Die übrigen Verfahrensschritte entsprechen dem in Fig. 2 dargestellten Verfahrensablauf.

Voraussetzung für das Funktionieren des Verfahrens ist, dass der verwendete Webbrowser des Benutzers Scripte nach dem ECMA-Standard oder JavaScript interpretieren kann. Es ist auch möglich, das Verfahren mit Programmen oder Scripten zu realisieren, die in Java oder Jscript oder VB-Script geschrieben sind. Ebenso ist dazu ein Flash Plug-in, ein Flash Movie oder ein Shockwave Plug-in oder ein Script im Shockwave-Format geeignet.

Ferner muss der Webbrowser zum Zeitpunkt des Drückens der festgelegten Taste das aktive Programm sein. Das Browserfenster, das die Homepage des Anbieters geladen hat, muss also aktiv sein. Die Einstellungen im Webbrowser müssen so gewählt sein, dass das Öffnen von weiteren Browserfenstern zugelassen ist. Es darf auch keine zusätzliche Software zur Unterdrückung von Pop-up-Fenstern aktiv sein. Weitere Voraussetzung ist, dass die Einfügemarke, der Cursor des Webbrowsers, nicht aktiv ist, weder im Eingabefeld für die Internetadresse noch in weiteren Eingabefeldern auf der angezeigten Seite. Das Verfahren bzw. das Script funktioniert auf der übergeordneten Homepage sowie auf den jeweiligen Unterseiten des Anbieters, die über die Homepage erreichbar sind.

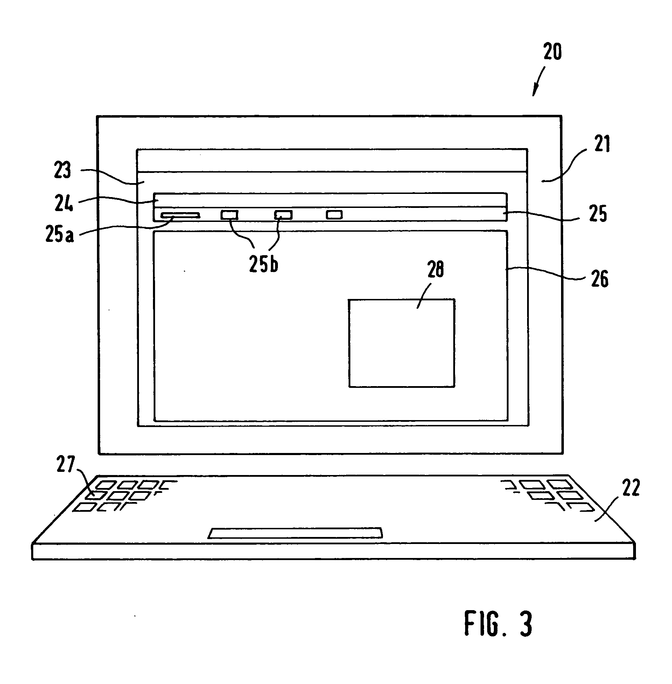

Fig. 3 zeigt den Computer eines Benutzers mit einer Symbolleiste in einem Browserfenster gemäß einem weiteren Ausführungsbeispiel der Erfindung.

Der Computer 20 besteht aus einem Bildschirm 21 sowie einer Tastatur 22 und der hier nicht dargestellten Hardware, die in einem Computergehäuse aufgenommen ist. Auf dem Computer 20 ist ein Browserprogramm installiert, über das Internetseiten aufgerufen werden können. Dies geschieht über eine geeignete Kommunikationsverbindung. Neben dem Browserprogramm ist auf dem Computer 20 ebenfalls ein Programm eines Anbieters installiert, das der Benutzer vorher von einer Netzseite heruntergeladen oder mit Hilfe eines Datenträgers wie einer CD-ROM oder einer DVD importiert hat. Auf dem Computer 20 wird das Browserprogramm aktuell ausgeführt, wobei ein Browserfenster 23 erscheint. Das Browserfenster 23 umfasst ein Eingabefeld 24, in das der Benutzer die Netzadresse einer aufzusuchenden Seite eingeben kann.

Unterhalb des Eingabefeldes 24 ist eine anbieterspezifische, als Toolbar ausgebildete Symbolleiste 25 angeordnet, deren Darstellung durch das Programm des Anbieters bewirkt wird. Die Symbolleiste 25 ermöglicht eine Suche im Netzwerk, wozu der Benutzer in das Eingabefeld 25a einen Suchbegriff eingibt. Die Netzwerksuche umfasst zweckmäßigerweise die Seiten des Anbieters. Daneben sind in der Symbolleiste 25 weitere Funktionsfelder 25b vorgesehen, mit deren Hilfe es beispielsweise möglich ist, eine Suche auf bestimmte Warengebiete zu beschränken oder direkt eine Angebotsseite des Anbieters aufzurufen. Darüber hinaus wird im Browserfenster 23 eine Netzseite 26 dargestellt, die der Benutzer durch die Eingabe im Eingabefeld 24 bzw. durch einen Klick auf Links in einer vorhergehenden Netzseite aufgerufen hat.

Das Programm, das die Darstellung der Symbolleiste 25 bewirkt, erfüllt weiterhin die Funktion, dass beim Drücken einer Taste 27 der Tastatur 22 eine Überprüfung des Tastaturcodes der gedrückten Taste sowie eines festgelegten Codes erfolgt und bei Übereinstimmung ein weiteres Fenster des Browserprogramms geöffnet wird. Dieses Öffnen eines weiteren Pop-up-Fensters erfolgt unabhängig davon, welche Netzseite 26 aktuell im Browserfenster 23 angezeigt wird. Der Benutzer hat somit die Möglichkeit, das weitere Fenster 28, das der Netzseite 26 überlagert wird, jederzeit aufzurufen, soweit nur sein Browserprogramm ausgeführt wird, also gestartet wurde und zweckmäßigerweise auch aktiv ist, wobei mit dem Browserprogramm gleichzeitig das Programm des Anbieters gestartet wird, das unter anderem zur Darstellung der Symbolleiste dient. Die Symbolleiste 25 erfüllt dabei neben ihrer eigentlichen Funktion zusätzlich die Aufgabe, den Benutzer an die Möglichkeit zum Aufruf des weiteren Fensters 28 durch die Betätigung der Taste 27 zu erinnern.

## Patentansprüche

1. Verfahren zum Übertragen von Informationen von einem Serverrechner über ein Netzwerk an einen Computer eines Benutzers, bei welchem Verfahren nach der Eingabe einer Netzwerkadresse eines Anbieters Informationen des Anbieters an den Computer des Benutzers übertragen und in einem Fenster eines Browserprogramms als Informationsseite dargestellt werden, **dadurch gekennzeichnet, dass** beim Drücken einer Taste durch den Benutzer der dieser Taste zugeordnete Tastaturcode mit einem festgelegten Tastaturcode verglichen und bei Übereinstimmung ein weiteres Fenster des Browserprogramms geöffnet wird, in dem Informationen des Anbieters dargestellt werden, wobei die Überprüfung der gedrückten Taste und das Öffnen des weiteren Fensters von einem auf der Informationsseite des Anbieters implementierten und vom Server zum Computer übertragenen Programm gesteuert wird.

2. Verfahren zum Übertragen von Informationen von einem Serverrechner über ein Netzwerk an einen Computer eines Benutzers, insbesondere nach Anspruch 1, bei welchem Verfahren benutzerseitig ein über eine Informationsseite eines Anbieters und/oder einen Datenträger zugängliches Programm des Anbieters auf dem Benutzercomputer installiert wird, welches die Darstellung einer anbieterspezifischen Symbolleiste in wenigstens einem Fenster eines Browserprogramms bewirkt, **dadurch gekennzeichnet, dass** bei Ausführung des Browserprogramms beim Drücken einer Taste durch den Benutzer der dieser Taste zugeordnete Tastaturcode mit einem festgelegten Tastaturcode verglichen und bei Übereinstimmung ein weiteres Fenster des Browserprogramms geöffnet wird, in dem Informationen des Anbieters dargestellt werden, wobei die Überprüfung der gedrückten Taste und das Öffnen des weiteren Fensters von dem installierten Programm gesteuert wird.

3. Verfahren nach Anspruch 1 oder 2, **dadurch gekennzeichnet, dass** der festgelegte Tastaturcode einer Buchstabentaste oder einer Zahlentaste oder einer Sonderzeichentaste zugeordnet wird.

4. Verfahren nach einem der vorangehenden Ansprüche, **dadurch gekennzeichnet, dass** der festgelegte Tastaturcode dem Benutzer über ein anderes Medium wie einen Katalog, eine Werbeanzeige, einen Werbebrief, eine Email oder eine SMS mitgeteilt wird.

5. Verfahren nach einem der vorangehenden Ansprüche, **dadurch gekennzeichnet, dass** auf der oder einer Informationsseite des Anbieters auf den festgelegten Tastaturcode hingewiesen wird.

6. Verfahren nach einem der vorangehenden Ansprüche, **dadurch gekennzeichnet, dass** verschiedene Tastaturcodes festgelegt werden, bei deren Eingabe ein dem jeweiligen Tastaturcode zugeordnetes weiteres Fenster geöffnet wird.

7. Verfahren nach Anspruch 6, **dadurch gekennzeichnet, dass** jedem Tastaturcode ein weiteres Fenster mit einem spezifischen Inhalt zugeordnet wird.

8. Verfahren nach einem der vorangehenden Ansprüche, **dadurch gekennzeichnet, dass** als auf der Informationsseite des Anbieters implementiertes Programm ein in einer Scriptsprache wie ECMA-Script oder Java oder JavaScript oder Jscript oder VB-Script geschriebenes Programm verwendet wird.

9. Verfahren nach einem der vorangehenden Ansprüche, **dadurch gekennzeichnet, dass** das weitere geöffnete Fenster kleiner als das erste Fenster des Browserprogramms dargestellt wird.

10. Verfahren nach einem der vorangehenden Ansprüche, **dadurch gekennzeichnet, dass** in dem weiteren geöffneten Fenster Angebote des Anbieters dargestellt werden.

11. Verfahren nach einem der vorangehenden Ansprüche, **dadurch gekennzeichnet, dass** in dem weiteren Fenster Aktionen des Anbieters wie Gewinnspiele, Preisausschreiben, Auktionen oder Rabattaktionen angekündigt werden.

12. Verfahren nach einem der vorangehenden Ansprüche, **dadurch gekennzeichnet, dass** der festgelegte Tastaturcode so gewählt wird, dass er mit dem Anfangsbuchstaben des Namens des Anbieters übereinstimmt.

13. Verfahren nach einem der vorangehenden Ansprüche, **dadurch gekennzeichnet, dass** der Serverrechner und der Computer des Benutzers über das Internet miteinander kommunizieren.

14. Verfahren nach einem der vorangehenden Ansprüche, **dadurch gekennzeichnet, dass** die Homepage des Anbieters als Informationsseite verwendet wird.

15. Verfahren nach einem der Ansprüche 2 bis 14, **dadurch gekennzeichnet, dass** die Symbolleiste ständig, insbesondere unabhängig von einer gegebenenfalls aufgerufenen Netzseite, angezeigt wird.

16. Verfahren nach einem der Ansprüche 2 bis 15, **dadurch gekennzeichnet, dass** die Symbolleiste eine Suche im Netzwerk, insbesondere auf den Seiten des Anbieters, ermöglicht.
